# EUROPEAN PATENT APPLICATION

(11) **EP 4 624 886 A1**
(43) Date of publication of application: **01.10.2025**
(21) Application number: 22966405.7
(22) Date of filing: 28.12.2022
(51) Int. Cl.: G01L 5/04, B60P 7/06

(54) **FORCE MEASUREMENT DEVICE FOR TIE-DOWN STRAP**

(30) Priority: 25.11.2022 CN 202211507931
(71) Applicant: Zhejiang Topsun Logistic Control Co., Ltd., Yuhuan Taizhou, Zhejiang 317600 (CN)
(72) Inventor: DONG, Yanfa, Zhejiang 317600 (CN); NIU, Shengliang, Zhejiang 317600 (CN); SUN, Huasen, Zhejiang 317600 (CN)
(74) Representative: Elzaburu S.L.P.
(86) International application number: PCT/CN2022/142793
(87) International publication number: WO 2024/108726

(57) **Abstract**

A force measuring device for a binding belt (28), aiming to overcome a defect that as a tensioning force of a binding belt (28) cannot be accurately judged, it cannot be ensured that the binding belt is in a tightened state. The device includes a force measuring body (1) and a pressure sensor (2) mounted on the force measuring body (1), the force measuring body (1) is provided with two belt mounting grooves (3), the pressure sensor (2) is provided between the two belt mounting grooves (3), the binding belt (28) passes through the two belt mounting grooves (3), and the binding belt (28) is pressed on the pressure sensor (2) with the two belt mounting grooves (3) as two fulcrums of the binding belt (28). The force measuring device for the binding belt (28) can conveniently detect the tensioning force of the binding belt (28), and after binding is completed, it is ensured that the binding belt (28) is in a tightened state to prevent goods from scattering due to loosening of the binding belt, which is conducive to ensuring safe transportation of the goods.

## Description

### TECHNICAL FIELD

The present disclosure relates to a technique for binding goods, in particular to a force measuring device for a binding belt.

### BACKGROUND

At present, during transportation of goods, it is often necessary to use binding belts for binding and fixation. However, the tightness of the binding belts cannot be directly reflected, and in many cases, whether the binding belts are tightened is judged based on experience of operators, which poses a great safety hazard. During the transportation of the goods, if the binding belts become loose due to not being tightened, the goods will be scattered. Therefore, when the binding belts are used for binding, it is necessary to ensure that the binding belts are already in a tightened state. However, whether the binding belts are in the tightened state cannot be directly detected.

### SUMMARY

The present disclosure provides a force measuring device for a binding belt in order to overcome the defects described above. The force measuring device for the binding belt can conveniently detect a tensioning force of the binding belt, and after binding is completed, it is ensured that the binding belt is in a tightened state to prevent goods from scattering due to loosening of the binding belt, which is conducive to ensuring safe transportation of the goods.

In order to solve the above-mentioned technical problems, the present disclosure adopts the following technical solutions: a force measuring device for a binding belt includes a force measuring body and a pressure sensor mounted on the force measuring body, the force measuring body is provided with two belt mounting grooves, the pressure sensor is provided between the two belt mounting grooves, the binding belt passes through the two belt mounting grooves, and the binding belt is pressed on the pressure sensor with the two belt mounting grooves as two fulcrums of the binding belt.

During use of the force measuring device for the binding belt, the force measuring device for the binding belt is clamped to the binding belt, the binding belt is inserted into the two belt mounting grooves and pressed on the pressure sensor, and a tensioning force of the binding belt is judged via a pressure signal detected by the pressure sensor. The greater the tensioning force of the binding belt, the greater the pressure on the pressure sensor. Therefore, whether the binding belt is in a tightened state can be judged by comparing a detected pressure value with a preset pressure value. When the binding belt is used for binding, the force measuring device for the binding belt can conveniently detect the tensioning force of the binding belt, and after the binding is completed, it is ensured that the binding belt is in the tightened state to prevent goods from scattering due to loosening of the binding belt, which is conducive to ensuring safe transportation of the goods.

Preferably, two ends of the force measuring body are provided with connecting strips, and gaps between the connecting strips and the force measuring body form the belt mounting grooves. The belt mounting grooves formed by this structure facilitates clamping the binding belt to the belt mounting grooves.

Preferably, one end of the connecting strip is connected to the force measuring body, and an opening is provided between the other end of the connecting strip and the force measuring body. The binding belt is inserted into the belt mounting grooves from the openings, which is convenient and fast.

Preferably, the connecting strips and the force measuring body are of an integrated structure, and two ends of the connecting strip are provided with curved rounded corners. As the connecting strips and the force measuring body are of the integrated structure, the structural strength is ensured. As the end portions of the connecting strips are provided as the curved rounded corners, the connecting strips are prevented from scratching the binding belt and users.

Preferably, an anti-release snap for limiting the binding belt is mounted at the opening between the force measuring body and the connecting strip. While the binding belt is mounted into the belt mounting grooves, the anti-release snaps deform under extrusion action, so that the binding belt can be inserted into the belt mounting grooves. After the force measuring device for the binding belt is mounted onto the binding belt, the anti-release snaps can play a role in limiting to prevent the force measuring device for the binding belt from releasing from the binding belt.

Preferably, a centerline of the binding belt in a length direction is parallelly close to or coincides with a centerline of a surface of the pressure sensor. Through this setting, the pressure exerted on the pressure sensor by the binding belt is more stable, which is conducive to improving the accuracy of the detection of the tensioning force of the binding belt.

Preferably, a surface of the pressure sensor in contact with the binding belt is in a curved transition towards a surface of the force measuring body from a middle to the two belt mounting grooves; and the binding belt is completely attached to the surface of the pressure sensor.

As the binding belt is completely attached to the surface of the pressure sensor, the distribution of the pressure exerted on the pressure sensor by the binding belt is balanced, and the direction in which the pressure sensor deforms and moves is always perpendicular to the direction of the surface, so that an offset phenomenon is avoided, and reliable pressure transmission is ensured.

Preferably, an edge of a surface of the pressure sensor has a rounded corner transition. Due to the rounded corner transition of the edge, the binding belt is prevented from being damaged.

Preferably, an upper surface of the pressure sensor is higher than the two belt mounting grooves. Through this structural setting, the binding belt can be pressed on the surface of the pressure sensor.

Preferably, the pressure sensor includes a sensor body and a force-bearing cover, the sensor body is provided with a deformation sheet, the force-bearing cover is provided with a connecting pin, the connecting pin is connected to the deformation sheet, and the binding belt is pressed on the force-bearing cover.

The tensioning force on the binding belt is exerted on the force-bearing cover, and the force-bearing cover exerts the pressure onto the deformation sheet through the connecting pin. A pressing force of the binding belt borne by the force-bearing cover is detected based on the deformation amount of the deformation sheet, and then the tensioning force of the binding belt is derived.

Preferably, a U-shaped through groove is formed between an edge of the deformation sheet and the sensor body, strain gauges are mounted on two opposite sides of the deformation sheet, and the strain gauges are encapsulated on the deformation sheet.

The U-shaped through groove is provided to ensure that the deformation sheet can be elastically deformed, and the strain gauges convert the elastic deformation amount of the deformation sheet into an electrical signal, thus facilitating the detection of the deformation amount. As the strain gauges are provided on the two opposite sides of the deformation sheet, through the comparison and correction of the strain gauges on the two sides, it is conducive to improving the detection accuracy.

Preferably, the deformation sheet is provided with two range adjusting grooves, the two range adjusting grooves are connected together to form a U-shaped structure, the two range adjusting grooves are respectively provided on two sides of the connecting pin, and the strain gauges are provided between the through groove and the range adjusting grooves.

By providing the range adjusting grooves, a measuring range of the pressure sensor can be adjusted. The longer or deeper the range adjusting grooves, the less the pressure that the deformation sheet can bear. That is, for achieving the same deformation amount, the force exerted on the deformation sheet is less, which is suitable for small-range detection. Similarly, the shorter or shallower the range adjusting grooves, the greater the pressure that the deformation sheet can bear. For achieving the same deformation amount, the force exerted on the deformation sheet is greater, which is suitable for large-range detection. By adjusting the length and depth of the range adjusting grooves, the range of the pressure sensor can be adjusted, and then the detection range for the tensioning force of the binding belt is adjusted.

Preferably, a range fine-adjusting hole is provided at an end position of the range adjusting groove on the deformation sheet. After the range of the pressure sensor is coarsely adjusted by changing the length and depth of the range adjusting grooves, the range is further finely adjusted by adjusting the diameter and depth of the range fine-adjusting holes, so that the range can be adjusted to a preset range.

Preferably, the force-bearing cover is provided protruding from a surface of the force measuring body, a buffer washer corresponding to the force-bearing cover is mounted on the surface of the force measuring body, and a force measuring gap is provided between the buffer washer and the force-bearing cover.

The layout of the force measuring gap ensures that the force-bearing cover has a certain amount of space to move, and the buffer washer plays a role in protecting the force-bearing cover and the force measuring body. When the detected tensioning force of the binding belt is beyond the detection range, a movement distance of the force-bearing cover is beyond the range, and in this case, the force-bearing cover is supported on the buffer washer, which plays a role in protection.

Preferably, the connecting pin is in a T shape, the connecting pin is provided with a stepped surface, the deformation sheet is provided with a connecting hole, a small-diameter portion of the connecting pin is adaptively inserted in the connecting hole, and the stepped surface is attached to the deformation sheet.

The stepped surface on the connecting pin is attached to the deformation sheet, which is conducive to the reliable transmission of pressure.

Preferably, the force measuring body includes an upper cover body and a lower cover body, the pressure sensor is mounted on the upper cover body, a left side and a right side of the upper cover body are provided with side panels, a section of the side panel is shaped like a Chinese character "gong", a left side and a right side of the lower cover body are inserted in the two side panels to realize a pull-out connection between the upper cover body and the lower cover body, and an end cap is connected between the upper cover body and each of two ends of the lower cover body.

The upper cover body and the lower cover body are in the pull-out connection to form the force measuring body, and are easy to assemble. The end caps are connected at the two ends, which improves the strength of the connection between the upper cover body and the lower cover body, and plays a good role in protecting parts between the upper cover body and the lower cover body.

Preferably, a circuit board and a power supply are mounted on the lower cover body, the power supply is connected to the circuit board, a controller and an indicator light capable of displaying different colors are mounted on the circuit board, and the pressure sensor and the indicator light are electrically connected to the controller.

The pressure signal detected by the pressure sensor is transmitted to the controller, and the controller compares the detected pressure value with the set value. If the detected pressure value does not reach the set value, it indicates that the tensioning force of the binding belt is not enough, and the binding belt does not reach the tightened state, in which case the indicator light shows yellow. If the detected pressure value reaches the set value, it indicates that the binding belt is already in the tightened state, in which case the indicator light shows green. Through the different colors of the indicator light, whether the binding belt is in the tightened state may be judged visually.

Preferably, a power button is mounted on the circuit board, the circuit board is connected to a charging connector through a wire, and the charging connector is mounted on the end cap.

The device is started by pressing the power button, and through the charging connector, the power supply can be charged conveniently.

Preferably, the lower cover body is provided with a mounting hole, the mounting hole is adaptively connected to a lampshade, the lampshade covers the indicator light, the lampshade is provided with an avoidance hole, and the power button penetrates out of the avoidance hole. The lampshade plays a role in protecting the indicator light, and the mounting of the power button is facilitated through the avoidance hole.

Compared with the prior art, the present disclosure has the following beneficial effects: (1) the force measuring device for the binding belt can conveniently detect the tensioning force of the binding belt, and after binding is completed, it is ensured that the binding belt is in the tightened state to prevent goods from scattering due to loosening of the binding belt, which is conducive to ensuring safe transportation of the goods; (2) as the anti-release snaps are mounted on the force measuring body, the force measuring device for the binding belt cannot slip off after being mounted to the binding belt, and the force measuring device for the binding belt is convenient to pull off the binding belt after completing force measurement; and (3) the detection range of the force measuring device for the binding belt can be adjusted to adapt to different use requirements and use scenarios.

### BRIEF DESCRIPTION OF DRAWINGS

Fig. 1 is a schematic structural diagram of the present disclosure;
Fig. 2 is a schematic structural diagram of the present disclosure in another direction;
Fig. 3 is an exploded view of the present disclosure;
Fig. 4 is a schematic diagram of an internal structure of a force measuring body of the present disclosure;
Fig. 5 is a schematic structural diagram of a sensor body of the present disclosure; and
Fig. 6 is a schematic structural diagram of a use state of the present disclosure.

In the figures, 1-Force measuring body, 2-Pressure sensor, 3-Belt mounting groove, 4-Connecting strip, 5-Opening, 6-Indicator light, 7-Anti-release snap, 8-Mounting slot, 9-Strain gauge, 10-Range adjusting groove, 11-Range fine-adjusting hole, 12-Buffer washer, 13-Side panel, 14-End cap, 15-Mounting hole, 16-Lampshade, 17-Stepped surface, 28-Binding belt, 29-Upper cover body, 30-Lower cover body, 31-Sensor body, 32-Force-bearing cover, 33-Deformation sheet, 34-Connecting pin, 35-Circuit board, 36-Controller, 37-Power button, 38-Charging connector, 39-Wiring plug, and 40-Power supply.

### DETAILED DESCRIPTION

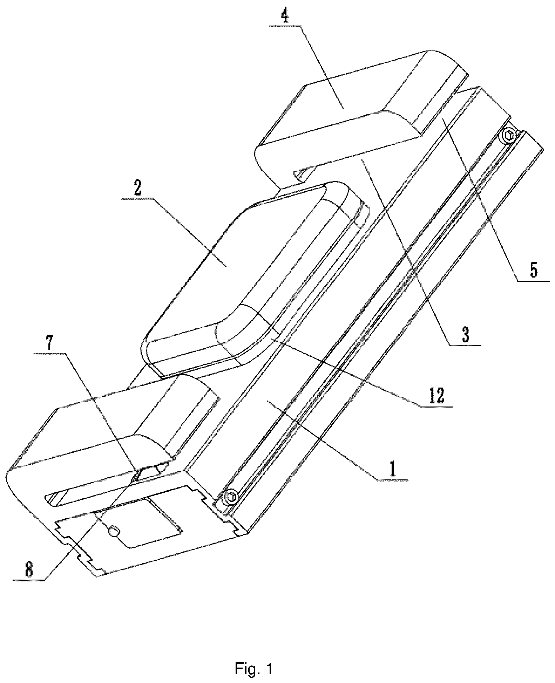

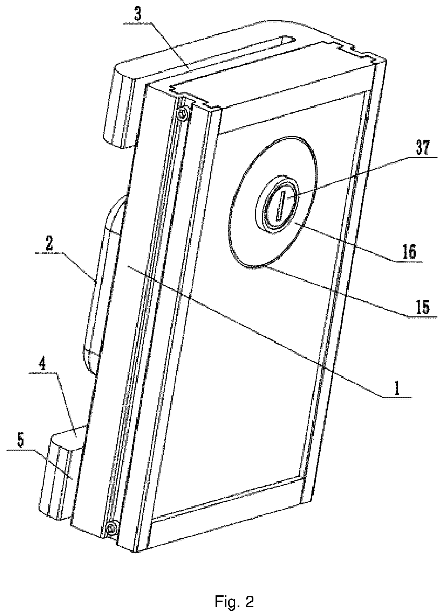

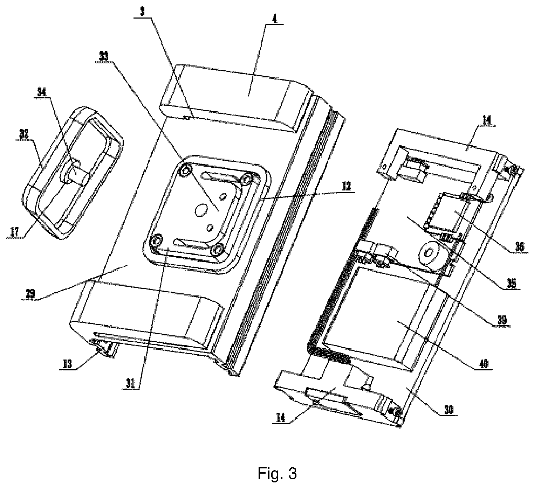

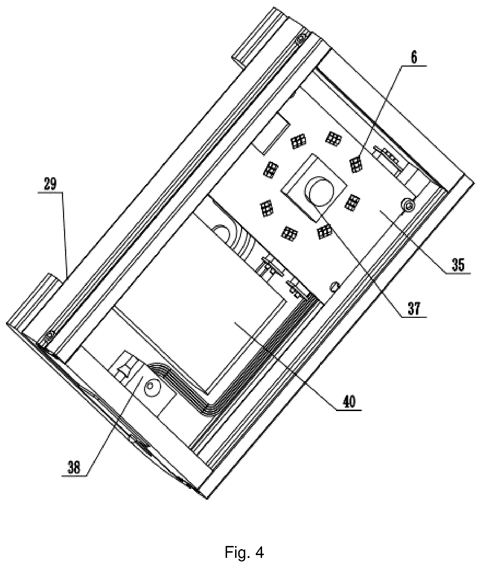

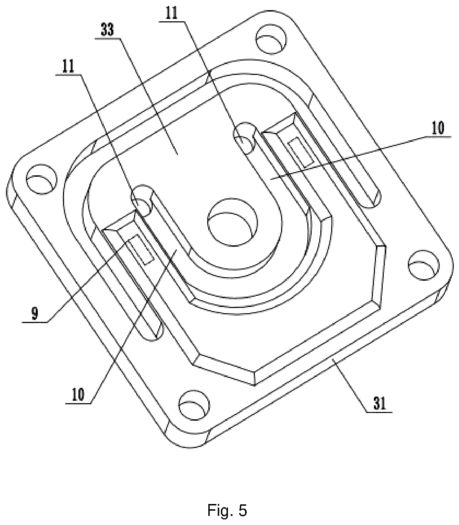

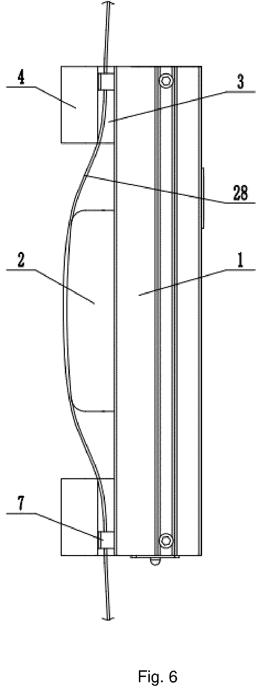

The technical solutions of the present disclosure are further specifically described below through specific embodiments with reference to the accompanying drawings:
Embodiment: A force measuring device for a binding belt (referring to Fig. 1 to Fig. 6) includes a force measuring body 1 and a pressure sensor 2 mounted on the force measuring body. The force measuring body is provided with two belt mounting grooves 3, an upper surface of the pressure sensor protrudes from a surface of the force measuring body, the pressure sensor is provided between the two belt mounting grooves, the binding belt 28 passes through the two belt mounting grooves, and the binding belt is pressed on the pressure sensor with the two belt mounting grooves as two fulcrums of the binding belt. The upper surface of the pressure sensor is higher than the two belt mounting grooves.

Two ends of the force measuring body are provided with connecting strips 4, and gaps between the connecting strips and the force measuring body form the belt mounting grooves. One end of the connecting strip is connected to the force measuring body, and an opening 5 is provided between the other end of the connecting strip and the force measuring body. The edge of the surface of the pressure sensor has a rounded corner transition. The connecting strips and the force measuring body are of an integrated structure, and two ends of the connecting strip are provided with curved rounded corners. An anti-release snap 7 for limiting the binding belt is mounted at the opening between the force measuring body and the connecting strip. The force measuring body is provided with mounting slots 8 corresponding to the anti-release snaps, the anti-release snaps are mounted at the mounting slots, the portion of the anti-release snap protruding from the surface of the force measuring body is in an isosceles trapezoid shape, and an end face of the anti-release snap abuts against the surface of the corresponding connecting strip. A surface of the pressure sensor in contact with the binding belt is in a curved transition towards a surface of the force measuring body from a middle to the two belt mounting grooves; and the binding belt is completely attached to the surface of the pressure sensor.

The pressure sensor includes a sensor body 31 and a force-bearing cover 32, the sensor body is provided with a deformation sheet 33, the force-bearing cover is provided with a connecting pin 34, the connecting pin is connected to the deformation sheet, and the binding belt is pressed on the force-bearing cover. The connecting pin is in a T shape, the connecting pin is provided with a stepped surface 17, the deformation sheet is provided with a connecting hole, a small-diameter portion of the connecting pin is adaptively inserted in the connecting hole, and the stepped surface is attached to the deformation sheet.

A U-shaped through groove 8 is formed between an edge of the deformation sheet and the sensor body, strain gauges 9 are mounted on two opposite sides of the deformation sheet, and the strain gauges are encapsulated on the deformation sheet. The deformation sheet is provided with two range adjusting grooves 10, the two range adjusting grooves are connected together to form a U-shaped structure, the two range adjusting grooves are respectively provided on two sides of the connecting pin, and the strain gauges are provided between the through groove and the range adjusting grooves. A range fine-adjusting hole 11 is provided at an end position of the range adjusting groove on the deformation sheet.

The force-bearing cover is provided protruding from a surface of the force measuring body, a buffer washer 12 corresponding to the force-bearing cover is mounted on the surface of the force measuring body, and a force measuring gap is provided between the buffer washer and the force-bearing cover.

The force measuring body includes an upper cover body 29 and a lower cover body 30, the pressure sensor is mounted on the upper cover body, a left side and a right side of the upper cover body are provided with side panels 13, a section of each of the side panels is shaped like a Chinese character "gong", a left side and a right side of the lower cover body are inserted in the two side panels to realize a pull-out connection between the upper cover body and the lower cover body, and an end cap 14 is connected between the upper cover body and each of two ends of the lower cover body.

A circuit board 35 and a power supply 40 are mounted on the lower cover body, the power supply is connected to the circuit board, a controller 36 and indicator lights 6 capable of displaying different colors are mounted on the circuit board, and the pressure sensor and the indicator lights are electrically connected to the controller. A power button 37 is mounted on the circuit board, the indicator lights are evenly distributed in a circumferential direction of the power button, the circuit board is connected to a charging connector 38 through a wire, and the charging connector is mounted on the end cap. The lower cover body is provided with a mounting hole 15, the mounting hole is adaptively connected to a transparent lampshade 16, the lampshade covers the indicator lights, the lampshade is provided with an avoidance hole, and the power button penetrates out of the avoidance hole. An edge of the lampshade is provided as a convex edge, and the convex edge abuts against an inner surface of the lower cover body.

Wiring plugs 39 connected to the circuit board are provided in a transverse direction, which can reduce a vertical occupied space, thereby facilitating the reduction of a volume of the entire force measuring device for the binding belt. The indicator lights are displayed on a back surface of the force measuring body, and the pressure sensor is mounted on a front surface of the force measuring body. The power supply can be a storage battery or a dry battery. A solar cell panel may also be mounted on the back surface of the force measuring body, and a photovoltaic controller is electrically connected between the solar cell panel and the storage battery to achieve solar charging.

During use of the force measuring device for the binding belt, the force measuring device for the binding belt is clamped to the binding belt, the binding belt is inserted into the two belt mounting grooves and pressed on the pressure sensor, and the tensioning force of the binding belt is judged via a pressure signal detected by the pressure sensor. The greater the tensioning force of the binding belt, the greater the pressure on the pressure sensor. Therefore, whether the binding belt is in a tightened state can be judged by comparing a detected pressure value with a preset pressure value. When the binding belt is used for binding, the force measuring device for the binding belt can conveniently detect the tensioning force of the binding belt, and after the binding is completed, it is ensured that the binding belt is in the tightened state to prevent goods from scattering due to loosening of the binding belt, which is conducive to ensuring safe transportation of the goods.

The above-mentioned embodiments are merely preferred solutions of the present disclosure, rather than a limitation to the present disclosure in any form, and there are other variants and modifications under the premise of not exceeding the technical solutions recorded in the claims.

## Claims

1. A force measuring device for a binding belt, **characterized in that**, comprising a force measuring body and a pressure sensor mounted on the force measuring body, wherein the force measuring body is provided with two belt mounting grooves, the pressure sensor is provided between the two belt mounting grooves, the binding belt passes through the two belt mounting grooves, and the binding belt is pressed on the pressure sensor with the two belt mounting grooves as two fulcrums of the binding belt.

2. The force measuring device for the binding belt according to claim 1, **characterized in that**, two ends of the force measuring body are provided with connecting strips, and gaps between the connecting strips and the force measuring body form the belt mounting grooves.

3. The force measuring device for the binding belt according to claim 2, **characterized in that**, one end of the connecting strip is connected to the force measuring body, and an opening is provided between the other end of the connecting strip and the force measuring body.

4. The force measuring device for the binding belt according to claim 3, **characterized in that**, the connecting strips and the force measuring body are of an integrated structure, and two ends of the connecting strip are provided with curved rounded corners.

5. The force measuring device for the binding belt according to claim 3, wherein an anti-release snap for limiting the binding belt is mounted at the opening between the force measuring body and the connecting strip.

6. The force measuring device for the binding belt according to claim 1, **characterized in that**, a centerline of the binding belt in a length direction is parallelly close to or coincides with a centerline of a surface of the pressure sensor.

7. The force measuring device for the binding belt according to claim 1, **characterized in that**, a surface of the pressure sensor in contact with the binding belt is in a curved transition towards a surface of the force measuring body from a middle to the two belt mounting grooves; and the binding belt is completely attached to the surface of the pressure sensor.

8. The force measuring device for the binding belt according to claim 1, **characterized in that**, an edge of a surface of the pressure sensor has a rounded corner transition.

9. The force measuring device for the binding belt according to claim 1, **characterized in that**, an upper surface of the pressure sensor is higher than the two belt mounting grooves.

10. The force measuring device for the binding belt according to claim 1, **characterized in that**, the pressure sensor comprises a sensor body and a force-bearing cover, the sensor body is provided with a deformation sheet, the force-bearing cover is provided with a connecting pin, the connecting pin is connected to the deformation sheet, and the binding belt is pressed on the force-bearing cover.

11. The force measuring device for the binding belt according to claim 10, **characterized in that**, a U-shaped through groove is formed between an edge of the deformation sheet and the sensor body, strain gauges are mounted on two opposite sides of the deformation sheet, and the strain gauges are encapsulated on the deformation sheet.

12. The force measuring device for the binding belt according to claim 11, **characterized in that**, the deformation sheet is provided with two range adjusting grooves, the two range adjusting grooves are connected together to form a U-shaped structure, the two range adjusting grooves are respectively provided on two sides of the connecting pin, and the strain gauges are provided between the through groove and the range adjusting grooves.

13. The force measuring device for the binding belt according to claim 12, **characterized in that**, a range fine-adjusting hole is provided at an end position of the range adjusting groove on the deformation sheet.

14. The force measuring device for the binding belt according to claim 10, **characterized in that**, the force-bearing cover is provided protruding from a surface of the force measuring body, a buffer washer corresponding to the force-bearing cover is mounted on the surface of the force measuring body, and a force measuring gap is provided between the buffer washer and the force-bearing cover.

15. The force measuring device for the binding belt according to claim 10, **characterized in that**, the connecting pin is in a T shape, the connecting pin is provided with a stepped surface, the deformation sheet is provided with a connecting hole, a small-diameter portion of the connecting pin is adaptively inserted in the connecting hole, and the stepped surface is attached to the deformation sheet.

16. The force measuring device for the binding belt according to any one of claims 1-15, **characterized in that**, the force measuring body comprises an upper cover body and a lower cover body, the pressure sensor is mounted on the upper cover body, a left side and a right side of the upper cover body are provided with side panels, a section of the side panel is shaped like a Chinese character "gong", a left side and a right side of the lower cover body are inserted in the two side panels respectively to realize a pull-out connection between the upper cover body and the lower cover body, and an end cap is connected between the upper cover body and each of two ends of the lower cover body.

17. The force measuring device for the binding belt according to claim 16, **characterized in that**, a circuit board and a power supply are mounted on the lower cover body, the power supply is connected to the circuit board, a controller and an indicator light capable of displaying different colors are mounted on the circuit board, and the pressure sensor and the indicator light are electrically connected to the controller.

18. The force measuring device for the binding belt according to claim 17, **characterized in that**, a power button is mounted on the circuit board, the circuit board is connected to a charging connector through a wire, and the charging connector is mounted on the end cap.

19. The force measuring device for the binding belt according to claim 18, **characterized in that**, the lower cover body is provided with a mounting hole, the mounting hole is adaptively connected to a lampshade, the lampshade covers the indicator light, the lampshade is provided with an avoidance hole, and the power button penetrates out of the avoidance hole.
